# NEUE EUROPÄISCHE PATENTSCHRIFT

(11) **EP 3 337 973 B2**
(45) Veröffentlichungstag und Bekanntmachung des Hinweises auf die Entscheidung über den Einspruch: **15.04.2026**
(45) Hinweis auf die Patenterteilung: 02.10.2019
(21) Anmeldenummer: 16751607.9
(22) Anmeldetag: 16.08.2016
(51) Int. Cl.: F03D 7/02

(54) **VERFAHREN ZUM BETRIEB EINER WINDENERGIEANLAGE, WINDENERGIEANLAGE UND COMPUTERPROGRAMMPRODUKT**
METHOD FOR OPERATING A WIND TURBINE, WIND TURBINE AND COMPUTER PROGRAM PRODUCT
PROCÉDÉ POUR FAIRE FONCTIONNER UNE ÉOLIENNE, ÉOLIENNE ET PRODUIT PROGRAMME D'ORDINATEUR

(30) Priorität: 17.08.2015 DE 102015010491
(43) Veröffentlichungstag der Anmeldung: 27.06.2018
(73) Patentinhaber: Siemens Gamesa Renewable Energy Service GmbH, 20097 Hamburg (DE)
(72) Erfinder: SCHÄFER, Tobias, 24988 Oeversee (DE)
(74) Vertreter: Glawe, Delfs, Moll
(86) Internationale Anmeldenummer: PCT/EP2016/069439
(87) Internationale Veröffentlichungsnummer: WO 2017/029294

(56) Entgegenhaltungen:
- EP-A1- 0 008 584
- US-A1- 2007 194 574

## Beschreibung

Die Erfindung betrifft ein Verfahren zum Betrieb einer Windenergieanlage, eine zur Durchführung des Verfahrens ausgebildete Windenergieanlage sowie ein Computerprogrammprodukt.

Windenergieanlagen sind aus dem Stand der Technik bekannt. Sie umfassen in der Regel einen Rotor, der drehbar an einer Gondel angeordnet ist, wobei die Gondel wiederum drehbar auf einem Turm angeordnet ist. Der Rotor treibt ggf. über eine Rotorwelle und ein Getriebe einen Generator an. Eine durch Wind induzierte Rotationsbewegung des Rotors kann so in elektrische Energie gewandelt werden, die dann über Umrichter und/oder Transformatoren - je nach Bauart des Generators auch wenigstens teilweise direkt - in ein elektrisches Netz eingespeist werden kann.

Wird bei einer Windenergieanlage die Energieerzeugung bzw. die Einspeisung von Energie eingestellt, weil bspw. ein Fehler im Netz oder der Windenergieanlage vorliegt oder der Netzbetreiber eine entsprechende Anforderung stellt, wird die Windenergieanlage in Leerlauf bzw. Trudelbetrieb versetzt.

Soll die Windenergieanlage nach Behebung des aufgetretenen Fehlers oder auf Anforderung des Netzbetreibers hin wieder in Betrieb genommen werden, werden im Stand der Technik regelmäßig die Windverhältnisse an der Windenergieanlage über einen gewissen Zeitraum nach Wegfall des Fehlers bzw. nach Eingang der Anforderung beobachtet, dies ist z.B. der Fall bei US 2007/194574 A1. Eine entsprechende Überprüfung über einen Zeitraum von bspw. zwei Minuten ist erforderlich, um auszuschließen, dass allein aufgrund einer Böe eine für den Anlagenstart ausreichende Windgeschwindigkeit angenommen wird. Letzteres könnte bspw. der Fall sein, wenn zum Anlagenstart ausschließlich die momentan gemessene Windgeschwindigkeit überprüft würde. Da ein jeder Startvorgang einer Windenergieanlage eine nicht unerhebliche Belastung für einzelne Komponenten der Windenergieanlage darstellen kann, wird durch die Beobachtung der Windverhältnisse über einen gewissen Zeitraum vor dem tatsächlichen Anfahren des Rotors der Windenergieanlage sichergestellt, dass die Windenergieanlage nicht aufgrund einer Böe erfolglos versucht wird zu starten.

Nachteilig an diesem Stand der Technik ist, dass nach Wegfall eines Fehlers der Windenergieanlage oder des Netzes bzw. nach Eingang einer Anforderung des Netzbetreibers ein gewisser Zeitraum bspw. von zwei Minuten oder mehr vergeht, bevor die Windenergieanlage tatsächlich angefahren wird, um elektrische Energie in das Netz einzuspeisen.

Der Erfindung liegt die Aufgabe zugrunde, ein Verfahren zum Betrieb einer Windenergieanlage, eine Windenergieanlage sowie ein Computerprogrammprodukt zu schaffen, bei der die Nachteile des Standes der Technik nicht mehr oder nur noch in vermindertem Maße auftreten.

Gelöst wird diese Aufgabe durch ein Verfahren zum Betrieb einer Windenergieanlage gemäß dem Hauptanspruch, eine Windenergieanlage gemäß dem Anspruch 11 sowie ein Computerprogrammprodukt gemäß Anspruch 14. Vorteilhafte Weiterbildungen sind Gegenstand der abhängigen Ansprüche.

Demnach betrifft die Erfindung ein Verfahren zum Betrieb einer Windenergieanlage, wobei für den Anlagenstart der Windenergieanlage auf Anforderung wenigstens ein Messwert über einen vorgegebenen Überwachungszeitraum beobachtet wird und der Anlagenstart nur dann erfolgt, wenn der wenigstens eine Messwert in dem Überwachungszeitraum definierten Vorgaben entspricht, wobei
- der wenigstens eine Messwert in einem Datenspeicher kontinuierlich gespeichert wird, wobei der Speicherzeitraum im Datenspeicher wenigstens dem vorgegebenen Überwachungszeitraum entspricht; und
- bei einer Anforderung für einen Anlagenstart anhand des Datenspeichers überprüft wird, ob der wenigstens eine Messwert in dem dem Überwachungszeitraum entsprechenden Zeitraum vor der Anforderung den definierten Vorgaben entspricht.

Weiterhin betrifft die Erfindung eine Windenergieanlage umfassend einen Rotor mit mehreren Rotorblättern, der drehbar an einer drehbar auf einem Turm angeordneten Gondel angeordnet und mit einem in der Gondel angeordneten Generator zur Umwandlung von auf den Rotor einwirkenden Windenergie in elektrische Energie verbunden ist, und eine Regelungseinrichtung zur Regelung der Windenergieanlage und deren Komponenten, wobei die Windenergieanlage weiterhin umfasst
- wenigstens einen Sensor zur Erfassung von wenigstens einem Messwert,
- einen Datenspeicher zur kontinuierlichen Speicherung des wenigstens einen erfassten Messwertes für einen Speicherzeitraum und
- ein Überprüfungsmodul zur Überprüfung bei einer Anforderung für ein Anlagenstart anhand des Datenspeichers, ob der wenigstens eine Messwert in dem einem vorgegebenen Überwachungszeitraum entsprechenden Zeitraum vor der Anforderung definierten Vorgaben entspricht, wobei der Speicherzeitraum wenigstens dem vorgegebenen Überwachungszeitraum entspricht, und die Regelungseinrichtung derart ausgebildet ist, dass die Windenergieanlage nur gestartet wird, wenn das Ergebnis der Überprüfung durch das Überprüfungsmodul positiv ist.

Die Erfindung betrifft weiterhin ein Computerprogrammprodukt umfassend Programmteile, welche, wenn geladen in einem Computer, zur Durchführung des erfindungsgemäßen Verfahrens ausgelegt sind.

Zunächst werden einige in Zusammenhang mit der Erfindung verwendete Begriffe erläutert.

Mit "Anlagenstart" ist die Überführung einer Windenergieanlage in einen Produktionsbetrieb bezeichnet, bei dem kinetische Energie des Windes in elektrische Energie, die ins Netz eingespeist wird, umgewandelt wird. Eine Windenergieanlage speist vor einem Anlagenstart keine aus der kinetischen Energie des Windes erzeugte elektrische Leistung in das Netz ein. Die Windenergieanlage kann dabei vom Netz getrennt sein. Es ist jedoch nicht ausgeschlossen, dass eine Windenergieanlage vor einem Anlagenstart mit dem Netz verbunden ist und bspw. zur Regelung der Blindleistung im Netz verwendet wird. Typische Gründe, weswegen eine Windenergieanlage keine aus der kinetischen Energie des Windes erzeugte elektrische Leistung einspeist, können bspw. zu hohe oder zu niedrige Windgeschwindigkeiten, Fehlfunktionen und technische Defekte der Windenergieanlage, Netzfehler, Wartungs- und Reparaturarbeiten an der Windkraftanlage oder im Verteilernetz, Schattenwurf oder Vereisung sein. In der Regel werden die Rotorblätter in einem solchen Fall in Fahnenstellung gedreht, sodass sich der Rotor nicht mehr oder nur noch mit einer geringen Drehzahl dreht (Trudeldrehzahl). Auch ist nicht ausgeschlossen, dass der Rotor über eine Bremse festgestellt wird.

"Kontinuierlich speichern" bedeutet im Zusammenhang mit der Erfindung, dass die zu speichernden Messwerte durchgehend und unabhängig vom Betriebszustand der Windenergieanlage gespeichert werden, also sowohl während des Einspeisens von elektrischer Leistung durch die Windenergieanlage ins Netz als auch während der Zeiten, in denen die Windenergieanlage keine aus der kinetischen Energie des Windes erzeugte elektrische Leistung in das Netz einspeist.

Bei der "Anforderung zu einem Anlagenstart" kann es sich um eine von dem Betreiber der Windenergieanlage, dem Betreiber des Netzes, in welches die Windenergieanlage die von ihr erzeugte elektrische Energie einspeist, oder von einem Strommakler bei Direktvermarktung der Energie übermittelte Anforderung handeln. Es kann sich aber auch um eine automatisch generierte Anforderung handeln, die bspw. nach dem Beheben eines Fehlers in der Windenergieanlage oder im Netz, nach erfolgreichem Durchführen von Wartungs- und Reparaturarbeiten oder durch das Vorliegen geeigneter Windverhältnisse ausgelöst wird.

Die Erfindung bietet den Vorteil, dass bei einer Anforderung, eine Windenergieanlage zu starten, die für den Anlagenstart über einen gewissen Überwachungszeitraum zu beobachtenden Messwerte rückschauend vorhanden sind, sodass unmittelbar nach der Anforderung für einen Anlagenstart anhand der zuvor gespeicherten Messwerte die über die definierten Vorgaben festgelegten Grundvoraussetzungen für einen Anlagenstart erfüllt sind. Es ist also unmittelbar nach Erhalt der Anforderung für einen Anlagenstart möglich zu überprüfen, ob der angeforderte Anlagenstart durchgeführt werden kann. Die Wartezeit von bspw. zwei Minuten, wie sie im Stand der Technik regelmäßig benötigt wird, kann entfallen.

Grundsätzlich ist es möglich den Datenspeicher als Massenspeicher auszuführen. Es ist jedoch bevorzugt, wenn der Datenspeicher ein Ringspeicher ist. Ein "Ringspeicher" speichert Daten kontinuierlich in einem gewissen Zeitraum und überschreibt diese nach dem Ablaufen eines vorgegebenen Speicherzeitraums wieder. Dadurch wird der von Daten belegte Speicherplatz, die älter sind als der vorgegebene Speicherzeitraum, für neuere aktuellere Daten genutzt. Der Ringspeicher kann als Ringpuffer ausgeführt sein. Durch die Verwendung eines Ringspeichers kann auf aufwendige Speicherlogik oder große Massenspeicher, die längerfristig historische Daten aufzeichnen, verzichtet werden.

Bei den definierten Vorgaben, die von dem wenigstens einen Messwert im Überwachungszeitraum eingehalten werden müssen, kann es sich bspw. um absolute oder relative Minimal- und/oder Maximalwerte handeln. Es ist aber auch möglich, dass Vorgaben hinsichtlich der maximal zulässigen Veränderung des wenigstens einen Messwertes über den Überwachungszeitraum bestehen. Entsprechende Vorgaben können durch eine maximal zulässige Spreizung der Messwerte, einen maximal zulässigen Gradienten und/oder eine maximal zulässige Standartabweichung definiert sein.

Es ist bevorzugt, wenn wenigstens zwei Messwerte kontinuierlich im Datenspeicher gespeichert und bei einer Anforderung für einen Anlagenstart überprüft werden. Dabei ist es möglich, dass der Überwachungszeitraum und/oder der Speicherzeitraum für die wenigstens zwei Messwerte jeweils gleich sind. Es ist aber auch möglich, dass der Überwachungszeitraum und/oder der Speicherzeitraum für jeden Messwert individuell festgelegt sind. Werden zwei oder mehr Messwerte für einen Anlagenstart überprüft, können die Vorgaben für die Messwerte auch kombiniert sein. So können bspw. die Vorgaben für einen Messwert von einem anderen Messwert abhängig sein, wobei diese Abhängigkeit zuvor definiert ist. Es sind auch komplexere Abhängigkeiten für Vorgaben und/oder Messwerte möglich, die bspw. in Form einer (Un-)Gleichung mit der Anzahl der Messwerte entsprechenden Anzahl an Variablen oder in Form von Kennlinien vorliegen kann.

Der wenigstens eine Messwert kann Informationen über die Umgebung der Windenergieanlage, bspw. die Windbedingungen, oder den Zustand der Windenergieanlage selbst widerspiegeln. Insbesondere umfasst der wenigstens eine Messwert wenigstens einen Messwert aus der Gruppe von Windrichtung, Windgeschwindigkeit, Gondelazimutposition, Turmkopfbeschleunigung, Turmschwingungssignale, Netzparameter (insbesondere Spannung und Frequenz) und/oder Temperatur der Umgebung. Der Messwert kann unmittelbar aus Daten eines Sensors, mit dem die fraglichen Informationen erfasst werden können, gewonnen werden. Eine evtl. Umrechnung der Sensordaten in Messwerte ist dabei nicht ausgeschlossen.

Es ist auch möglich, dass der erfindungsgemäß vorgesehene Messwert ein Hybridmesswert ist, in dem verschiedene Informationen, wie bspw. Daten mehrerer Sensoren, gebündelt und/oder zusammengefasst sind.

Der Überwachungszeitraum für wenigstens einen Messwert kann wenigstens ca. 60 Sekunden, vorzugsweise wenigstens ca. 120 Sekunden betragen. Ein entsprechender Überwachungszeitraum kann bspw. für die Messung von Windrichtung und/oder Windgeschwindigkeit sinnvoll sein. Für andere Messwerte, bspw. die Turmkopfbeschleunigung und/oder Turmschwingungssignale, können aber auch Überwachungszeiträume von ca. 10 Sekunden oder vorzugsweise ca. 20 Sekunden ausreichend sein.

Es ist bevorzugt, wenn im Datenspeicher über einen Speicherzeitraum kontinuierlich Referenzdaten abgespeichert werden, wobei die Referenzdaten zur Plausibilisierung des wenigstens einen Messwertes geeignet sind und der Speicherzeitraum der Referenzdaten wenigstens dem Überwachungszeitraum des zu plausibilisierenden, wenigstens einen Messwertes entspricht. Bei den Referenzdaten kann es sich um Messwerte der Windenergieanlage bzw. um über Sensoren gewonnene Informationen handeln, die zwar selbst nicht bei einer Anforderung für einen Anlagenstart auf definierte Vorgaben hin überprüft werden müssen, die aber zur Plausibilisierung der Messwerte, die entsprechend überprüft werden müssen, geeignet sind. Bei den Referenzdaten kann es sich auch um extern zugeführte Daten, bspw. von einer von der Windenergieanlage gesondert ausgeführten Wetterstation, handeln. Mit Hilfe der Referenzdaten kann überprüft werden, ob die kontinuierlich abgespeicherten Messwerte plausibel sind. Es ist auch möglich, dass die Referenzdaten und/oder die Messwerte untereinander für eine Überprüfung ihrer Plausibilität verwendet werden. Es ist auch möglich, die Messwerte unmittelbar mit Hilfe von Maximal- oder Minimalwerten, maximal zulässigen Gradienten, maximal zulässigen Standartabweichungen o.ä. unmittelbar, d.h. ggf. auch ohne Rückgriff auf Referenzdaten, zu plausibilisieren.

Die Überprüfung der Plausibilität der im Datenspeicher abzuspeichernden oder abgespeicherten Messwerte und/oder Referenzdaten kann bereits während des kontinuierlichen Speicherns oder aber bei der Überprüfung des wenigstens einen Messwerts bei Anforderung für einen Anlagenstart erfolgen. Indem bereits während des Speicherns der Messwerte und/oder Referenzdaten deren Plausibilität überprüft wird, muss bei einer Anforderung für einen Anlagenstart keine - ggf. zeitaufwendige Plausibilitätsprüfung - mehr durchgeführt werden, wodurch ein schnellerer Anlagenstart möglich wird. Wird eine Plausibilitätsprüfung erst bei Anforderung für einen Anlagenstart durchgeführt, lassen sich ggf. einfache Muster im Verlauf der Messwerte und/oder Referenzdaten, wie bspw. Pendelbewegungen o.ä., erkennen, die einem Anlagenstart entgegenstehen können.

Wird ein Plausibilitätsmangel festgestellt, ist bevorzugt, den Datenspeicher zu leeren. Gleichzeitig können - sofern möglich - die Sensoren für diejenigen Messwerte und/oder Referenzdaten, für die ein Plausibilitätsmangel festgestellt wurde, reinitialisiert werden. Indem der Datenspeicher geleert wird, wird in der Regel die Überprüfung, ob der wenigstens eine Messwert den definierten Vorgaben entspricht, solange nicht positiv abgeschlossen werden können, bis der Überwachungsraum für diesen wenigstens einen Messwert im Datenspeicher vollständig mit Messwerten gefüllt ist. Insbesondere nach einer Re-Initialisierung der betroffenen Sensoren kann so wirksam verhindert werden, dass ein Anlagenstart auf Grundlage fehlerhafter Messwerte und/oder Referenzdaten erfolgt.

Die Plausibilität von Messwerten und/oder Referenzdaten kann durch Überprüfung anhand von Maximal- und/oder Minimalwerten, und/oder von Gradienten, Mittelwert und/oder Standartabweichung erfolgen, wobei entsprechende Sollwerte in Abhängigkeit von anderen Messwerten und/oder Referenzdaten definiert sein können. Die entsprechenden Sollwerte sind vorgegeben.

Die Referenzdaten können bspw. den Anstellwinkel der Rotorblätter und/oder die Rotordrehzahl umfassen.

Die erfindungsgemäße Windenergieanlage ist zur Durchführung des erfindungsgemäßen Verfahrens ausgebildet. Zur Erläuterung der Windenergieanlage sowie zu vorteilhaften Weiterbildungen der Windenergieanlage wird auf die vorstehenden Ausführungen verwiesen.

Auch zur Erläuterung des erfindungsgemäßen Computerprogrammproduktes wird auf die vorstehenden Ausführungen verwiesen.

Die Erfindung wird nun unter Bezugnahme auf die beigefügten Zeichnungen anhand einer bevorzugten Ausführungsform beispielhaft beschrieben. Es zeigen:
Figur 1: ein erstes Ausführungsbeispiel einer erfindungsgemäßen Windenergieanlage; und
Figur 2: eine schematische Darstellung des Überprüfungsmoduls und des Datenspeichers der Windenergieanlage aus Figur 1.

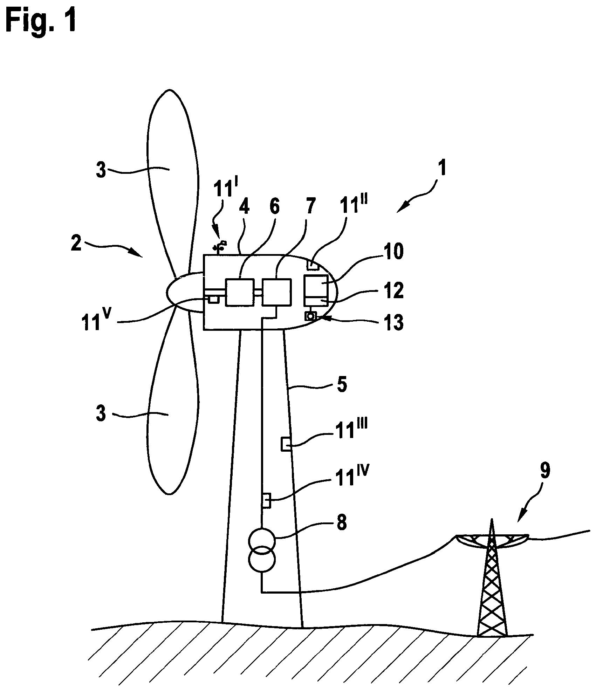

In Figur 1 ist schematisch eine erfindungsgemäße Windenergieanlage 1 dargestellt. Die Windenergieanlage 1 umfasst einen Rotor 2 mit mehreren, im Anstellwinkel verstellbaren Rotorblättern 3, der drehbar an einer Gondel 4 angeordnet ist. Die Gondel 4 ist wiederum drehbar auf einem Turm 5 angeordnet.

Der Rotor 2 treibt über die Rotorwelle ein Getriebe 6 an, welches auf seiner Abtriebseite mit einem Generator 7 verbunden ist. Eine durch Wind induzierte Rotationsbewegung des Rotors 2 kann so in elektrische Energie gewandelt werden, die dann ggf. über Umrichter (nicht dargestellt) und/oder Transformatoren 8 in ein elektrisches Netz 9 eingespeist werden kann.

Die Windenergieanlage 1 umfasst weiterhin eine Regelungseinrichtung 10, die über nicht dargestellte Steuerleitungen mit den verschiedenen Komponenten der Windenergieanlage 1 verbunden ist, um diese zu steuern. Unter anderem ist die Regelungseinrichtung 10 dazu ausgebildet, den Rotor 2 durch Drehen der Gondel 4 gegenüber dem Turm 5 dem Wind nach auszurichten. Auch werden durch die Regelungseinrichtung 10 der Anstellwinkel der Rotorblätter 3 und die in das Netz 9 eingespeiste elektrische Leistung geregelt. Über Änderung des Anstellwinkels der Rotorblätter 3 und der in das Netz 9 eingespeisten elektrischen Leistung kann die Regelungseinrichtung 10 das Rotormoment bzw. das Generatormoment beeinflussen.

Die Regelungseinrichtung 10 ist mit verschiedenen Sensoren 11 verbunden, um die gewünschten Steuerungsaufgaben erfüllen zu können. Einer dieser Sensoren 11 ist der Windsensor 11', über den die Windrichtung und die Windgeschwindigkeit ermittelt werden kann. Weiterhin ist ein Beschleunigungssensor 11" mit der Regelungseinrichtung verbunden, mit dem die Turmkopfbeschleunigung erfasst werden kann. Auch ist ein weiterer Beschleunigungssensor 11'" auf ca. halber Höhe des Turmes 5 vorgesehen, mit dem auch allein durch den Beschleunigungssensor 11" nicht erfassbare Schwingungsmodi des Turmes 5 erfasst werden können. Über den Spannungssensor 11^{IV} können Informationen über den Zustand des elektrischen Netzes 9 erfasst werden. Der Sensor 11^{V} erfasst die Drehzahl des Rotors 2.

Daneben können noch weitere (nicht dargestellte) Sensoren 11 für die Gondelazimutposition - also die Winkelstellung der Gondel 4 gegenüber dem Turm 5 - oder den Anstellwinkel der Rotorblätter 3 vorgesehen sein. Die Sensoren 11 werden regelmäßig bereits für die allgemeine Steuerung der Windenergieanlage 1 durch die Regelungseinrichtung 10 vorgesehen.

Als Teil der Regelungseinrichtung 10 ist erfindungsgemäß ein Überprüfungsmodul 12 vorgesehen, welches mit einem Datenspeicher 13 verbunden ist. Die Regelungseinrichtung 10 bzw. das Überprüfungsmodul 12 ist derart ausgebildet, dass von wenigstens einem der Sensoren 11 erfasste Daten kontinuierlich für einen Speicherzeitraum im als Ringspeicher 13' ausgeführten Datenspeicher 13 gespeichert werden.

Speist die Windenergieanlage 1 bspw. aufgrund eines Fehlers im Netz 9 oder in der Windenergieanlage 1 selbst keine aus der kinetischen Energie des Windes erzeugte elektrische Leistung in das Netz ein, erhält die Regelungseinrichtung 10 nach Behebung des entsprechenden Fehlers eine Anforderung, wieder zu starten. Für diesen Fall ist das Überprüfungsmodul 12 derart ausgebildet, anhand der im Ringspeicher 13' gespeicherten Daten zu überprüfen, ob ein Anlagenstart möglich ist.

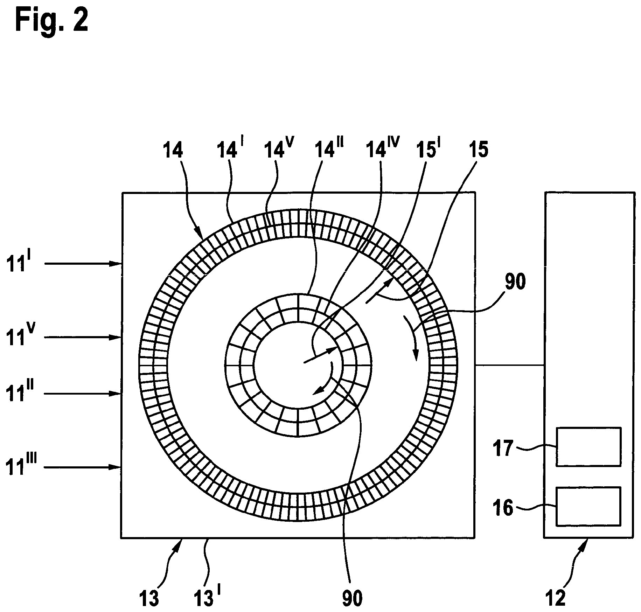

Anhand von Figur 2 wird nun die Funktionsweise von Überprüfungsmodul 12 und Ringspeicher 13' näher erläutert.

Der Ringspeicher 13' ist in Form mehrerer Ringpuffer aufgebaut und wird bspw. über die Regelungseinrichtung 10 oder über das Überprüfungsmodul 12 mit den Daten der Sensoren 11 für die Windgeschwindigkeit (Sensor 11'), die Rotordrehzahl (Sensor 11^{V}), die Turmkopfbeschleunigung (Sensor 11"), die Beschleunigung auf halber Höhe des Turmes 5 (Sensor 11"') und der Rotordrehzahl (Sensor 11^{V}) versorgt.

Diese Sensordaten werden in separaten Ringpuffern 14 im Ringspeicher 13' kontinuierlich - also unabhängig davon, ob die Windenergieanlage aus der kinetischen Energie des Windes erzeugte elektrische Leistung in das Netz einspeist oder nicht - hinterlegt. Die Daten betreffend Windgeschwindigkeit und Rotordrehzahl werden in den Ringpuffern 14' und 14^{V}, die jeweils einen Speicherzeitraum von 120 Sekunden aufweisen, gespeichert; die Turmbeschleunigungsdaten der Sensoren 11" und 11''' werden in den Ringpuffern 14" und 14''' mit einem Speicherzeitraum vom 20 Sekunden gespeichert.

Die in Figur 2 dargestellten Sektoren der Ringpuffer 14 verdeutlichen dabei lediglich die Länge des Speicherzeitraums der einzelnen Ringpuffer 14 in Sekunden, nicht jedoch die zeitliche Auflösung, in der die Daten der Sensoren 11 vorliegen. Insbesondere die Daten der Sensoren 11" und 11''' betreffend die Turmbeschleunigungsdaten liegen in einer hohen Auflösung von mehreren Messwerten pro Sekunde vor. Es ist auch möglich, dass die hochaufgelösten Turmbeschleunigungsdaten in einer (nicht dargestellten) Sensordatenverarbeitung vorverarbeitet werden und nur Statussignale für die Turmbeschleunigung in einer gegenüber den hochaufgelösten Turmbeschleunigungsdaten niedrigeren Auflösung im Ringspeicher 13' gespeichert werden.

Empfangene Daten werden jeweils an die Stelle der in Richtung 90 umlaufenden Pointer 15, 15' geschrieben, sodass nach einem vollständigen Umlauf eines Pointers 15, 15' die an einer Stelle gespeicherten Daten durch neue Daten überschrieben werden. Die Umlaufgeschwindigkeiten der Pointer 15, 15' sind unterschiedlich. So benötigt der Pointer 15 für einen Umlauf 120 Sekunden, der Pointer 15' lediglich 20 Sekunden.

Bei den in den Ringpuffern 14', 14" und 14''' hinterlegen Daten über die Windgeschwindigkeit sowie die Turmbeschleunigungen handelt es sich um Messwerte im Sinne der vorliegenden Erfindung, während die im Ringpuffer 14^{V} hinterlegten Daten Referenzdaten sind, die - wie nachfolgend erläutert - lediglich zur Plausibilitätsprüfung der anderen Daten, nicht jedoch zur unmittelbaren Überprüfung, ob ein Anlagenstart erlaubt ist, genutzt werden.

Erhält die Regelungseinrichtung 10 der keine aus der kinetischen Energie des Windes erzeugte elektrische Leistung in das Netz einspeisenden Windenergieanlage 1 eine Anforderung, wieder zu starten, überprüft die Überprüfungseinheit zunächst die momentan in den Ringpuffern 14' und 14^{V} enthaltenen Daten auf Plausibilität. Dazu wird überprüft, ob die Windgeschwindigkeiten (Ringpuffer 14') zeitlich mit der Rotordrehzahl (Ringpuffer 14^{V}) - die im Falle einer keine aus der kinetischen Energie des Windes erzeugte elektrische Leistung in das Netz einspeisenden Windenergieanlage die Trudeldrehzahl ist - grundsätzlich über den gesamten Speicherzeitraum korrelieren. Ist dies nicht der Fall, kann dies ein Anzeichen dafür sein, dass wenigstens einer der Sensoren 11' oder 11^{V} defekt ist. In diesem Fall wird ein Anlagenstart durch das Überprüfungsmodul 12 unterbunden und es kann eine Warnung - bspw. über ein nicht dargestelltes SCADA-System (Supervisory Control and Data Acquisition System) - ausgegeben werden.

Ist die Überprüfung auf Plausibilität erfolgreich abgeschlossen, wird anschließend durch das Überprüfungsmodul 12 überprüft, ob die in den Ringpuffern 14', 14" und 14''' in dem Überprüfungsmodul 12 hinterlegten Messwerte die Vorgaben 16 erfüllen.

Zusätzlich oder alternativ kann die Überprüfung auf Plausibilität auch kontinuierlich, d. h. bereits beim Abspeichern der Daten, erfolgen. Fehlerhafte Sensoren 11 können so schneller erkannt werden. Lediglich der Fall eines korrupten Datenspeichers 13 ist dann erst beim Auslesen der Daten erkennbar.

Für den Ringpuffer 14' wird überprüft, ob die dort hinterlegten Messwerte über den gesamten Speicherzeitraum in einem von einem Minimal- und einem Maximalwert definierten Bereich liegen. Indem die Messwerte über den gesamten Speicherzeitraum überprüft werden, entspricht der Überwachungszeitraum für die Windgeschwindigkeit dem Speicherzeitraum, im dargestellten Ausführungsbeispiel also 120 Sekunden.

Die in den Ringpuffern 14" und 14''' betreffend die Turmbeschleunigungen hinterlegten Messwerte werden über den gesamten Speicherzeitraum, der damit dem Überwachungszeitraum für die Turmbeschleunigungen entspricht, einem Analysemodul 17 in dem Überprüfungsmodul 12 zugeführt, wo aus den Messwerten die Energie in die einzelnen Eigenformen des Turmes 5 ermittelt wird. Für jede Eigenform ist dabei eine Vorgabe 16 für die maximale Schwingungsenergie vorhanden.

Entsprechen alle Messwerte in den Ringpuffern 14', 14" und 14''' über den jeweiligen Überwachungszeitrum den definierten Vorgaben 16, führt die von dem Überprüfungsmodul 12 durchgeführte Prüfung zu einem positiven Ergebnis, woraufhin die Regelungseinrichtung 10 die Windenergieanlage 1 gemäß einem vorgegebenen Prozess anfährt. Ist die Prüfung negativ, wird die Windenergieanlage 1 zunächst nicht angefahren, und die vorbeschriebene Überprüfung der Messwerte wird solange durchgeführt, bis die Prüfung erfolgreich abgeschlossen ist. Bei einem negativen Ergebnis der Prüfung kann auch ein entsprechender Hinweis- bspw. über ein nicht dargestelltes SCADA-System - ausgegeben werden.

Wird die oben beschriebene Überprüfung auf Plausibilität nicht erfolgreich abgeschlossen, werden sämtliche Daten in den Ringpuffern 14' und 14^{V} durch das Überprüfungsmodul gelöscht bzw. auf null gesetzt und gleichzeitig die Sensoren 11' und 11^{V} reinitialisiert. In der Folge wird die zuvor beschriebene Überprüfung der Messwerte aus Ringpuffer 14' wenigstens solange erfolglos bleiben, bis zumindest der Ringpuffer 14' wieder vollständig mit nach der Re-Initialisierung der Sensoren 11' und 11^{V} gewonnenen Messwerten gefüllt ist.

## Patentansprüche

1. Verfahren zum Betrieb einer Windenergieanlage (1), wobei für den Anlagenstart der Windenergieanlage (1) auf Anforderung wenigstens ein Messwert über einen vorgegebenen Überwachungszeitraum beobachtet wird und der Anlagenstart nur dann erfolgt, wenn der wenigstens eine Messwert in dem Überwachungszeitraum definierten Vorgaben entspricht, **dadurch gekennzeichnet, dass**
- der wenigstens eine Messwert in einem Datenspeicher (13) kontinuierlich gespeichert wird, wobei der Speicherzeitraum im Datenspeicher (13) wenigstens dem vorgegebenen Überwachungszeitraum entspricht; und
- bei einer Anforderung für einen Anlagenstart anhand des Datenspeichers (13) überprüft wird, ob der wenigstens eine Messwert in dem dem Überwachungszeitraum entsprechenden Zeitraum vor der Anforderung den definierten Vorgaben (16) entspricht,
wobei der wenigstens eine Messwert wenigstens einen Messwert aus der Gruppe von Windrichtung, Windgeschwindigkeit, Gondelazimutposition, Turmkopfbeschleunigung, Turmschwingungssignale und/oder Temperatur der Umgebung umfasst.

2. Verfahren nach Anspruch 1,
**dadurch gekennzeichnet, dass**
der Datenspeicher (13) ein Ringspeicher (13') ist.

3. Verfahren nach Anspruch 1 oder 2,
**dadurch gekennzeichnet, dass**
wenigstens zwei Messwerte kontinuierlich im Datenspeicher (13) gespeichert und bei einer Anforderung für einen Anlagenstart überprüft werden, wobei vorzugsweise für die wenigstens zwei Messwerte unterschiedliche Überwachungszeiträume und/oder Speicherzeiträume vorgegeben sind.

4. Verfahren nach einem der vorhergehenden Ansprüche,
**dadurch gekennzeichnet, dass**
im Datenspeicher (13) über einen Speicherzeitraum kontinuierlich Referenzdaten abgespeichert werden, wobei die Referenzdaten zur Plausibilisierung des wenigstens einen Messwertes geeignet sind und der Speicherzeitraum der Referenzdaten wenigstens dem Überwachungszeitraum des zu plausibilisierenden, wenigstens einen Messwerts entspricht.

5. Verfahren nach einem der vorhergehenden Ansprüche,
**dadurch gekennzeichnet, dass**
während des kontinuierlichen Speicherns oder bei der Überprüfung des wenigstens einen Messwerts bei Anforderung für einen Anlagenstart die im Datenspeicher (13) abzuspeichernden oder abgespeicherten wenigstens einen Messwert und/oder Referenzdaten auf Plausibilität überprüft werden.

6. Verfahren nach Anspruch 5,
**dadurch gekennzeichnet, dass**
bei einem festgestellten Plausibilitätsmangel der Datenspeicher (13) geleert wird.

7. Verfahren nach einem der Ansprüche 5 oder 6,
**dadurch gekennzeichnet, dass**
die Plausibilisierung durch Überprüfung anhand von Maximal- und/oder Minimalwerten, und/oder von Gradienten, Mittelwerten und/oder Standartabweichungen erfolgt.

8. Verfahren nach einem der Ansprüche 4 bis 6,
**dadurch gekennzeichnet, dass**
die Referenzdaten den Anstellwinkel der Rotorblätter (3) und/oder die Rotordrehzahl umfassen.

9. Verfahren nach einem der vorhergehenden Ansprüche,
**dadurch gekennzeichnet, dass**
der Überwachungszeitraum wenigstens 60 sec, vorzugsweise wenigstens 120 sec beträgt.

10. Windenergieanlage (1) umfassend einen Rotor (2) mit mehreren Rotorblättern (3), der drehbar an einer drehbar auf einem Turm (5) angeordneten Gondel (4) angeordnet und mit einem in der Gondel (4) angeordneten Generator (7) zur Umwandlung von auf den Rotor (3) einwirkenden Windenergie in elektrische Energie verbunden ist, und eine Regelungseinrichtung (10) zur Regelung der Windenergieanlage (1) und deren Komponenten, wobei die Windenergieanlage (1) weiterhin umfasst
- wenigstens einen Sensor (11) zur Erfassung von wenigstens einem Messwert, wobei der wenigstens eine Messwert wenigstens einen Messwert aus der Gruppe von Windrichtung, Windgeschwindigkeit, Gondelazimutposition, Turmkopfbeschleunigung, Turmschwingungssignale und/oder Temperatur der Umgebung umfasst,
- einen Datenspeicher zur kontinuierlichen Speicherung des wenigstens einen erfassten Messwertes für einen Speicherzeitraum, und
ein Überprüfungsmodul (12) zur Überprüfung bei einer Anforderung für ein Anlagenstart anhand des Datenspeichers, ob der wenigstens eine Messwert in dem einem vorgegebenen Überwachungszeitraum entsprechenden Zeitraum vor der Anforderung definierten Vorgaben (16) entspricht, wobei der Speicherzeitraum wenigstens dem vorgegebenen Überwachungszeitraum entspricht, und die Regelungseinrichtung (10) derart ausgebildet ist, dass die Windenergieanlage (1) nur gestartet wird, wenn das Ergebnis der Überprütung durch das Überprüfungsmodul (12) positiv ist.

11. Windenergieanlage nach Anspruch 10,
**dadurch gekennzeichnet, dass**
der Datenspeicher (13) ein Ringspeicher (13') ist.

12. Windenergieanlage nach Anspruch 10oder 11,
**dadurch gekennzeichnet, dass**
die Windenergieanlage zur Durchführung des Verfahrens nach einem der Ansprüche 1 bis 10 ausgebildet ist.

13. Computerprogrammprodukt umfassend Programmteile, welche, wenn geladen in einem Computer, zur Durchführung eines Verfahrens nach einem der Ansprüche 1 bis 9 ausgelegt sind.

## Claims

1. Method for operating a wind turbine (1), wherein for system start of the wind turbine (1) on request at least one measured value is observed over a predetermined monitoring period and the system start is effected only when the at least one measured value in the monitoring period corresponds to defined specifications, **characterized in that**
- the at least one measured value is stored continuously in a data storage (13), wherein the storage period in the data storage (13) corresponds at least to the predetermined monitoring period; and
- upon a request for a system start, it is checked, on the basis of the data storage (13), whether the at least one measured value in the period corresponding to the monitoring period before the request corresponds to the defined specifications (16),
wherein the at least one measured value comprises at least one measured value from the group of wind direction, wind speed, nacelle azimuth position, tower head acceleration, tower vibration signals and/or temperature of the environment.

2. Method according to Claim 1,
**characterized in that**
the data storage (13) is a ring buffer (13').

3. Method according to Claim 1 or 2,
**characterized in that**
at least two measured values are stored continuously in the data storage (13) and checked upon a request for a system start, wherein preferably differing monitoring periods and/or storage periods are specified for the at least two measured values.

4. Method according to any one of the preceding claims,
**characterized in that**
reference data are stored continuously in the data storage (13) over a storage period, wherein the reference data are suitable for checking the plausibility of the at least one measured value, and the storage period of the reference data corresponds at least to the monitoring period of the at least one measured value to be checked for plausibility.

5. Method according to any one of the preceding claims,
**characterized in that**
the at least one measured value and/or reference data that are to be stored, or that are stored, in the data storage (13) are checked for plausibility during the continuous storage or during the checking of the at least one measured value upon request for a system start.

6. Method according to Claim 5,
**characterized in that**,
if a plausibility deficiency is found, the data storage (13) is emptied.

7. Method according to either of Claims 5 and 6,
**characterized in that**
the plausibility checking is effected by checking on the basis of maximum and/or minimum values, and/or of gradients, mean values and/or standard deviations.

8. Method according to any one of Claims 4 to 6,
**characterized in that**
the reference data include the angle of attack of the rotor blades (3) and/or the rotor rotational speed.

9. Method according to any one of the preceding claims, **characterized in that** the monitoring period is at least 60 seconds, preferably at least 120 seconds.

10. Wind turbine (1), comprising a rotor (2) having a plurality of rotor blades (3), which is rotatably arranged on a nacelle (4) that is rotatably arranged on a tower (5), and which is connect to a generator (7), arranged in the nacelle (4), for converting wind energy acting on the rotor (3) into electrical energy, and a closed-loop control system (10) for controlling the wind turbine (1) and its components, wherein the wind turbine (1) furthermore comprises
- at least one sensor (11) for sensing at least one measured value, wherein the at least one measured value comprises at least one measured value from the group of wind direction, wind speed, nacelle azimuth position, tower head acceleration, tower vibration signals and/or temperature of the environment,
- a data storage for continuously storing the at least one sensed measured value for a storage period, and
a verification module (12) for verifying, upon a request for a system start, on the basis of the data storage, whether the at least one measured value in the period corresponding to a predetermined monitoring period before the request corresponds to predefined specifications (16), wherein the storage period at least corresponds to the predetermined monitoring period, and the closed-loop control system (10) is designed such that the wind turbine (1) is started only when the result of the verification by the verification module (12) is positive.

11. Wind turbine according to Claim 10,
**characterized in that**
the data storage (13) is a ring buffer (13').

12. Wind turbine according to Claim 10 or 11,
**characterized in that**
the wind turbine is designed to implement the method according to any one of Claims 1 to 10.

13. Computer program product comprising program parts that, when loaded in a computer, are designed to implement a method according to any one of Claims 1 to 9.

## Revendications

1. Procédé pour faire fonctionner un aérogénérateur (1), pour le démarrage de l'installation de l'aérogénérateur (1), au moins une valeur mesurée étant observée sur demande sur une période de surveillance prédéfinie et le démarrage de l'installation n'étant effectué que si l'au moins une valeur mesurée correspond à des prescriptions définies dans la période de surveillance, **caractérisé en ce que**
- l'au moins une valeur mesurée est continuellement enregistrée dans une mémoire de données (13), la période d'enregistrement dans la mémoire de données (13) correspondant au moins à la période de surveillance prédéfinie ; et
- lors d'une demande pour un démarrage de l'installation, un contrôle est effectué à l'aide de la mémoire de données (13) en vue de vérifier si, dans la période correspondant à la période de surveillance, l'au moins une valeur mesurée correspond à la prescription (16) définie avant la demande,
ladite au moins une valeur mesurée comprenant au moins une valeur mesurée issue du groupe comprenant la direction du vent, la vitesse du vent, la position azimutale de la nacelle, l'accélération de la tête du mât, des signaux d'oscillation du mât et/ou la température de l'environnement.

2. Procédé selon la revendication 1, **caractérisé en ce que** la mémoire de données (13) est une mémoire circulaire (13').

3. Procédé selon la revendication 1 ou 2, **caractérisé en ce qu'**au moins deux valeurs mesurées sont continuellement enregistrées dans la mémoire de données (13) et sont contrôlées lors d'une demande pour un démarrage de l'installation, des périodes de surveillance et/ou des périodes d'enregistrement différentes étant de préférence prédéfinies pour les au moins deux valeurs mesurées.

4. Procédé selon l'une des revendications précédentes, **caractérisé en ce que** des données de référence sont continuellement enregistrées dans la mémoire de données (13) sur une période d'enregistrement, les données de référence étant adaptées pour vérifier la plausibilité de l'au moins une valeur mesurée et la période d'enregistrement des données de référence correspondant au moins à la période de surveillance de l'au moins une valeur mesurée dont il faut vérifier la plausibilité.

5. Procédé selon l'une des revendications précédentes, **caractérisé en ce que** pendant l'enregistrement continu ou lors du contrôle de l'au moins une valeur mesurée lors d'une demande pour un démarrage de l'installation, la plausibilité de l'au moins une valeur mesurée et/ou des données de référence à enregistrer ou enregistrées dans la mémoire de données (13) est vérifiée.

6. Procédé selon la revendication 5, **caractérisé en ce que** lorsqu'une absence de plausibilité est constatée, la mémoire de données (13) est vidée.

7. Procédé selon l'une des revendications 5 ou 6, **caractérisé en ce que** la vérification de la plausibilité est effectuée par un contrôle à l'aide de valeurs maximales et/ou minimales, et/ou de gradients, des valeurs moyennes et/ou d'écarts-types.

8. Procédé selon l'une des revendications 4 à 6, **caractérisé en ce que** les données de référence comprennent l'angle d'incidence des pales de rotor (3) et/ou la vitesse de rotation du rotor.

9. Procédé selon l'une des revendications précédentes, **caractérisé en ce que** la période de surveillance est au moins égale à 60 secondes, de préférence au moins 120 secondes.

10. Aérogénérateur (1) comprenant un rotor (2) pourvu de plusieurs pales de rotor (3) qui sont montées à rotation sur une nacelle (4) montée à rotation sur un mât (5) et relié à un générateur (7) disposé dans la nacelle (4) et destiné à convertir l'énergie éolienne agissant sur le rotor (3) en énergie électrique, et un dispositif de régulation (10) destiné à réguler l'aérogénérateur (1) et ses composants, l'aérogénérateur (1) comprenant en outre :
- au moins un capteur (11) pour enregistrer au moins une valeur mesurée, ladite au moins une valeur mesurée comprenant au moins une valeur mesurée issue du groupe comprenant la direction du vent, la vitesse du vent, la position azimutale de la nacelle, l'accélération de la tête de mât, des signaux d'oscillation du mât et/ou la température de l'environnement,
- une mémoire de données destinée à enregistrer continuellement l'au moins une valeur mesurée acquise pendant une période d'enregistrement, et
un module de contrôle (12) destiné à, lors d'une demande pour un démarrage de l'installation, effectuer un contrôle à l'aide de la mémoire de données en vue de vérifier si, dans une période correspondant à une période de surveillance prédéfinie, l'au moins une valeur mesurée correspond à des prescriptions (16) définies avant la demande, la période d'enregistrement correspondant au moins à la période de surveillance prédéfinie et le dispositif de régulation (10) étant configuré de telle sorte que l'aérogénérateur (1) n'est démarré que lorsque le résultat du contrôle par le module de contrôle (12) est positif.

11. Aérogénérateur selon la revendication 10, **caractérisé en ce que** la mémoire de données (13) est une mémoire circulaire (13').

12. Procédé selon la revendication 10 ou la revendication 11, **caractérisé en ce que** l'aérogénérateur est configuré pour mettre en œuvre le procédé selon l'une des revendications 1 à 10.

13. Produit de programme informatique comprenant des parties de programme qui, lorsqu'elles sont chargées dans un ordinateur, sont conçues pour mettre en œuvre un procédé selon l'une des revendications 1 à 10.
